# EUROPÄISCHE PATENTSCHRIFT

(11) **EP 0 831 018 B1**
(45) Veröffentlichungstag und Bekanntmachung des Hinweises auf die Patenterteilung: **09.04.2003**
(21) Anmeldenummer: 97112826.9
(22) Anmeldetag: 25.07.1997
(51) Int. Cl.: B62H 3/00

(54) **Ständer für Fahrräder**
Bicycle stand
Support de bicyclette

(30) Priorität: 20.08.1996 DE 29614368 U
(43) Veröffentlichungstag der Anmeldung: 25.03.1998
(73) Patentinhaber: EISEN- UND DRAHTWERK ERLAU AKTIENGESELLSCHAFT, D-73431 Aalen (DE)
(72) Erfinder: Müller, Anton, 73432 Aalen (DE)
(74) Vertreter: Jackisch-Kohl, Anna-Katharina

(56) Entgegenhaltungen:
- DE-A- 2 905 788
- DE-U- 9 416 533

## Beschreibung

Die Erfindung betrifft einen Ständer für Fahrräder nach dem Oberbegriff des Anspruches 1.

Bei bekannten Fahrradständern (DE 94 16 533) ist das Klemmteil so an der Ständerstütze befestigt, daß es die betreffende Sattelstange des jeweiligen Fahrrades in einer bestimmten, festgelegten Höhe aufnimmt. Solche Fahrradständer eignen sich für einen Großteil der im Handel befindlichen Fahrräder. Es sind jedoch immer mehr Fahrräder auf dem Markt, bei denen an der Sattelstange Anbauten, wie beispielsweise Bowdenzüge für Schaltungen oder Bremsen, mit Klammern gehalten sind. Aber auch Pumpen werden an der Sattelstange befestigt, und zwar in und entgegen Fahrtrichtung. Schließlich kann auch das Sattelrohr verschiedener Fahrräder unterschiedlichen Durchmesser aufweisen. Es gibt schließlich auch Fahrräder, bei denen an der Sattelstange Werkzeugtaschen, Getränkeflaschen, Kindersitzbefestigungen und dergleichen angeordnet sind. Sattelstangen mit relativ großem Durchmesser und solche mit den oben erwähnten Anbauten können im Klemmteil des Fahrradständers nicht sicher befestigt werden.

Es sind auch Fahrradständer bekannt (DE 29 05 788), die zum Montieren, Warten, Reparieren oder Pflegen von Fahrrädern vorgesehen sind und zwei gabelförmige Halterungen aufweisen, in die ein Tretkurbellager sowie ein Lenkkopf des Fahrrades eingelegt werden können. Die für den Lenkkopf vorgesehene gabelförmige Halterung hat zwei unterschiedlich weite Aufnahmeabschnitte, die an die Form des Lenkkopfes des Fahrrades angepaßt sind.

Der Erfindung liegt die Aufgabe zugrunde, den gattungsgemäßen Fahrradständer so auszubilden, daß an ihm Fahrräder sicher gehalten werden können.

Diese Aufgabe wird beim gattungsgemäßen Fahrradständer erfindungsgemäß mit den kennzeichnenden Merkmalen des Anspruches 1 gelöst.

Der erfindungsgemäße Ständer weist zwei unterschiedlich weite Klemmaufnahmeabschnitte auf, von denen einer zur Aufnahme einer dickeren und der andere zur Aufnahme einer dünneren Sattelstange geeignet ist. Hat die Sattelstange Anbauten, wie Bowdenzüge, Fahrradpumpen, Werkzeugtaschen, Getränkeflaschen, Kindersitzbefestigungen und dergleichen, kann die Sattelstange im einen Klemmaufnahmeabschnitt gehalten werden, während die Anbauten dann im anderen Klemmaufnahmeabschnitt untergebracht werden können. Somit läßt sich die Sattelstange sicher am erfindungsgemäßen Ständer festklemmen, ohne daß an ihr vorgesehene Anbauten den sicheren Halt beeinträchtigen. Am erfindungsgemäßen Fahrradständer können somit Fahrräder unterschiedlichster Ausbildung und mit den unterschiedlichsten Anbauten einwandfrei gehalten werden.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigen
- Fig. 1: zwei an einem erfindungsgemäßen Fahrradständer geparkte Fahrräder in Seitenansicht,
- Fig. 2: die Einzelheit X in Fig. 1 in vergrößerter Darstellung,
- Fig. 3: ein Klemmteil des Fahrradständers nach den Fig. 1 und 2 in vergrößerter Darstellung und in Draufsicht gemäß Pfeil III in Fig. 2,
- Fig. 4: eine Seitenansicht des Klemmteiles gemäß Fig. 3,
- Fig. 5: eine Ansicht in Richtung des Pfeiles V in Fig. 1,
- Fig. 6: eine Draufsicht gemäß Pfeil VI in Fig. 1,
- Fig. 7: die Einzelheit Y in Fig. 6 in vergrößerter Darstellung.

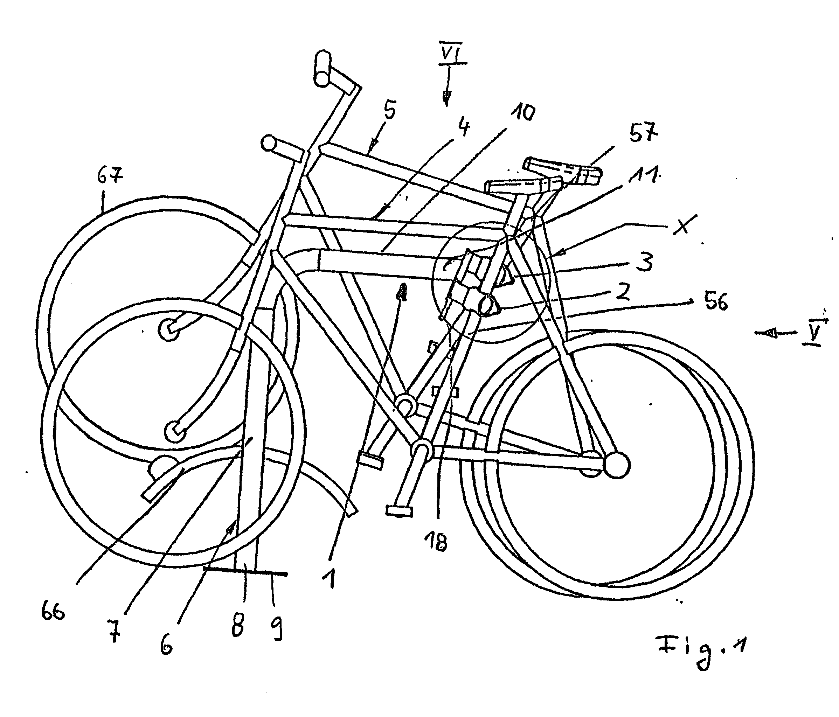

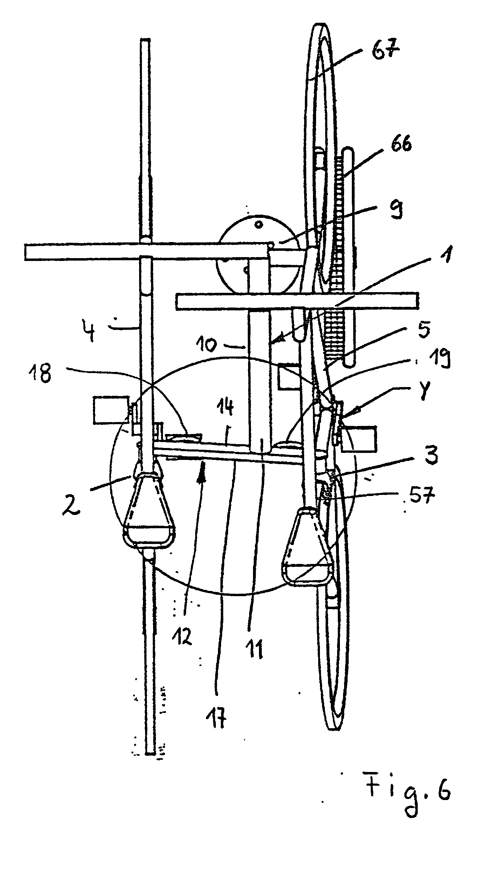

Der Fahrradständer 1 gemäß den Fig. 1 bis 7 wird im Untergrund fest verankert, kann aber auch auf dem Boden beispielsweise über eine Platte verschraubt sein. Er weist im Ausführungsbeispiel zwei Klemmteile 2 und 3 auf, an denen jeweils ein Fahrrad 4 und 5 geparkt werden kann.

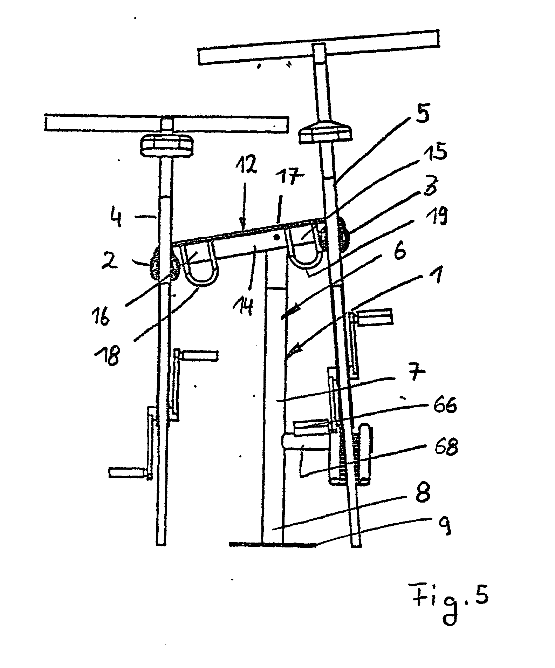

Der Ständer 1 hat eine durch ein L-förmig gebogenes Rohr gebildete Stütze 6, deren vertikaler Schenkel 7 am unteren Ende 8 eine Befestigungsplatte 9 aufweist, die auf dem Boden vorzugsweise mit Schrauben oder dergleichen verankert ist. Der Schenkel 7 geht bogenförmig gekrümmt in den horizontalen Schenkel 10 der Stütze 6 über. An seinem freien Ende 11 ist ein Querträger 12 befestigt, der die Klemmteile 2 und 3 trägt. Wie Fig. 5 zeigt, ist der Querträger 12 so an der Stütze 6 des Fahrradständers 1 montiert, daß er außermittig an ihm befestigt und leicht schräg geneigt ist. Durch die außermittige Lage ist ein kürzerer Arm 15 mit dem Klemmteil 3 und ein längerer Arm 16 mit dem Klemmteil 2 gebildet. Der kürzere Arm 15 ist schräg nach oben und der längere Arm 16 schräg nach unten geneigt. Der Querträger 12 ist nahezu über seine ganze Länge mit rechteckigem Querschnitt versehen. An seiner Rückseite 17 sind benachbart zu den Klemmteilen 2, 3 zwei u-förmige Haltebügel 18, 19 befestigt, an denen die Fahrräder 4 und 5 beispielsweise mit einer Kette gesichert werden können. Die Haltebügel 18 und 19 liegen mit ihren Schenkeln an der Rückseite 17 des Querträgers 12 an und sind an ihr vorzugsweise verschweißt. Die Haltebügel 18 und 19 ragen über den Querträger 12 etwa um ihre halbe Länge nach unten vor, so daß das Sicherungsteil für die Fahrräder 4, 5 einfach durch die Bügelöffnung eingefädelt werden kann. Wie die Zeichnungen zeigen, liegen die beiden Haltebügel 18, 19 im Bereich zwischen den beiden Klemmteilen 2, 3 zu beiden Seiten des Schenkels 10 der Stütze 6. Dadurch lassen sich die beiden Fahrräder 4, 5 einfach am Ständer 1 sichern.

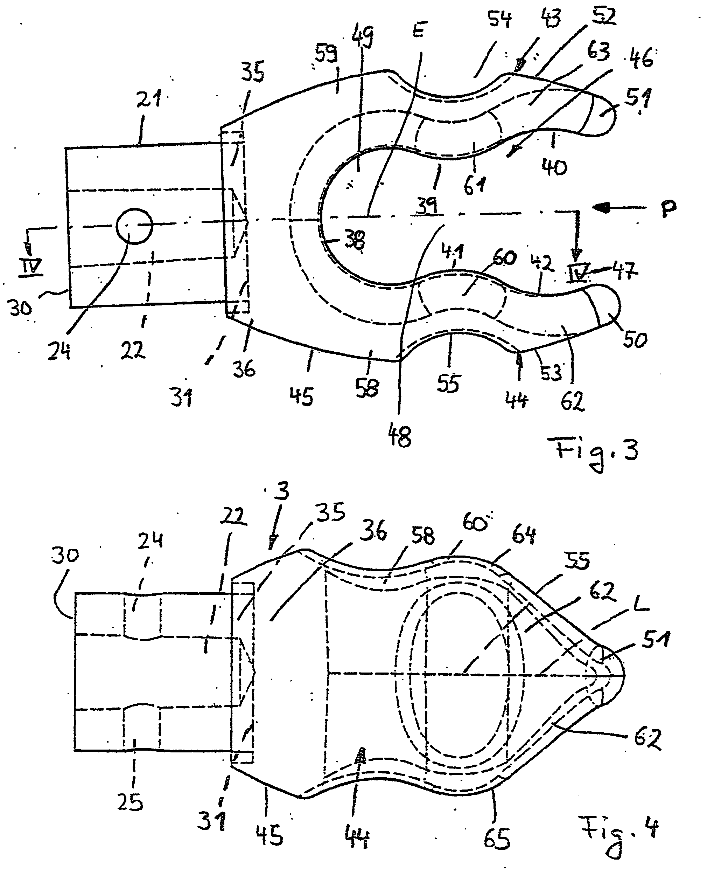

An den beiden Enden des Querträgers 12 sind überstehende Halteteile 14 vorgesehen, an denen die Klemmteile 2 und 3 befestigt sind. Von den Halteteilen 14 stehen senkrecht Zapfen ab, die sich in Richtung auf die Rückseite 17 des Querträgers 12 erstrecken. Die Klemmteile 2, 3 haben hülsenförmige, zylindrische Anschlußstücke 20, 21 mit denen sie auf die Zapfen gesteckt werden. Die Anschlußstücke 20, 21 haben jeweils eine Sacklochöffnung 22, 23, in welche die Zapfen des Querträgers 12 ragen. Auf den Zapfen werden die Anschlußstücke 20, 21 mit (nicht dargestellten) Querstiften gegen Lösen gesichert, die durch miteinander fluchtende Diametralöffnungen 24, 25 und 26, 27 (Fig. 3, 4 und 7) der Anschlußstücke 20, 21 und der Zapfen gesteckt werden.

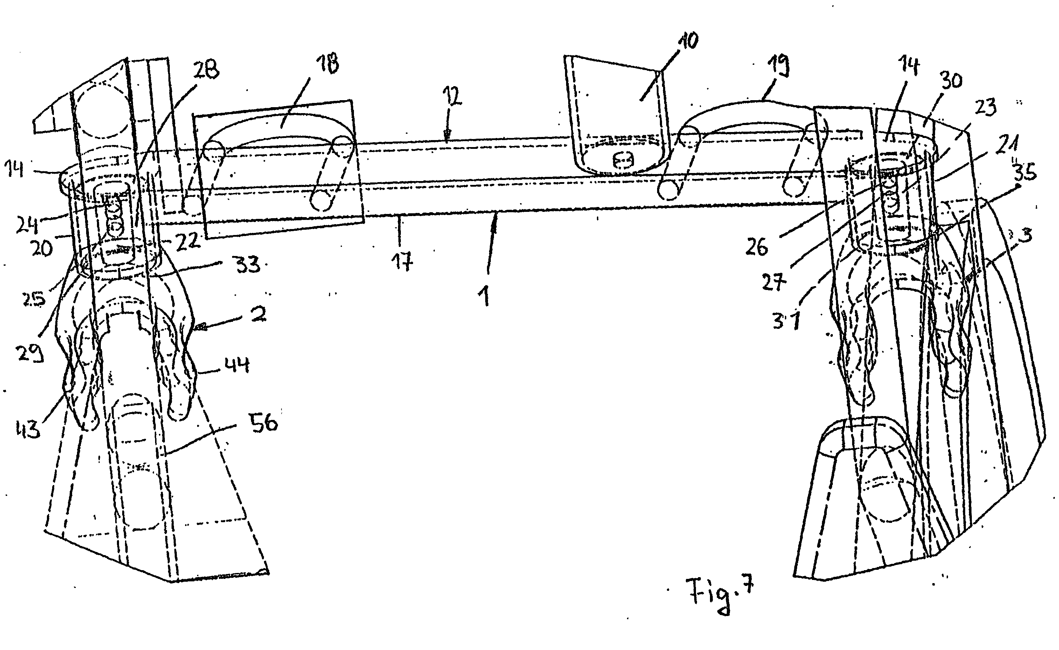

Die Anschlußstücke 20, 21 liegen mit ihren freien Stirnseiten 28, 30 (Fig. 7) an den Halteteilen 14 des Querträgers 12 an. Am anderen Ende sind die Anschlußstücke 20, 21 mit umlaufenden Radialflanschen 33, 35 versehen, mit denen sie am Boden von Vertiefungen 29, 31 der Klemmteile 2, 3 anliegen.

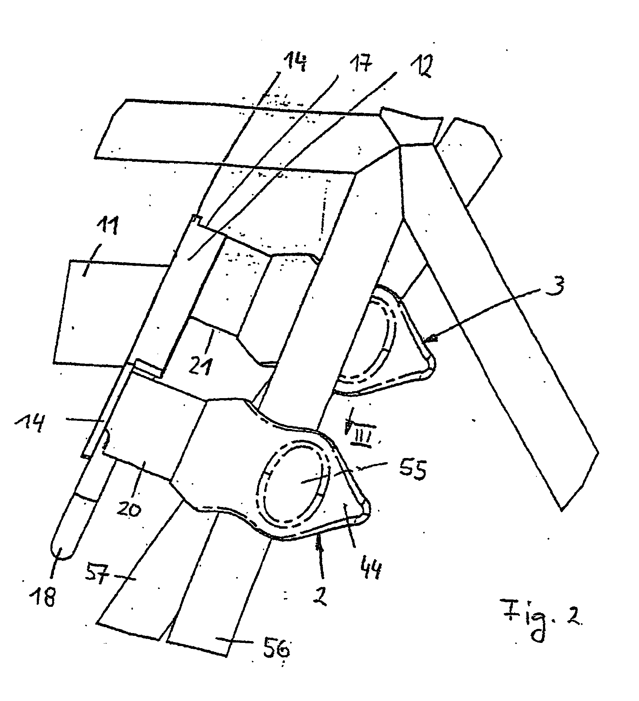

Die beiden Klemmteile 2, 3 sind im Ausführungsbeispiel gleich ausgebildet, so daß nachfolgend nur das eine Klemmteil 3 anhand der Fig. 2 und 3 näher erläutert werden soll.

In Draufsicht gemäß Fig. 3 hat das Klemmteil 3 etwa die Form eines U-förmigen Bügels, dessen Quersteg 36 etwa kreisrunden Querschnitt hat. Die an das Anschlußstück 21 anschließende Stirnseite des Quersteges 36 ist eben ausgebildet und weist die Vertiefung 31 für den Ringflansch 35 des Anschlußstückes 21 auf. Der innere Rand 38 des Quersteges 36 ist, in Draufsicht auf das Klemmteil 3 gemäß Fig. 3 gesehen, teilkreisförmig abgerundet und geht in die ebenfalls teilkreisförmig abgerundeten Innenseiten 39 bis 42 der Schenkel 43 und 44 des Klemmteiles 3 über. Die Mantelfläche 45 des Quersteges 36 liegt auf einem sich vom Anschlußstück 21 aus nach außen erweiternden Mantel eines Kegelstumpfes.

Die Schenkel 43 und 44 sind spiegelsymmetrisch zu einer eine Aufnahmeöffnung 46 des Klemmteiles 3 halbierenden Längsmittelebene E ausgebildet und in Draufsicht gemäß Fig. 3 etwa s-förmig gekrümmt. Ihre an den Quersteg anschließenden Übergangsabschnitte 58, 59 sind teilkreisförmig nach außen gekrümmt, so daß ihre Innenseiten mit der des Querstückes etwa auf einem Halbkreis - in Ansicht gemäß Fig. 3 gesehen - und ihre Außenseiten auf dem Mantel 45 des Quersteges 36 liegen.

Die Übergangsabschnitte 58, 59 gehen in nach innen gekrümmte Mittelabschnitte 60, 61 über. Ihre Innenseiten begrenzen eine Verengung 48 der Aufnahmeöffnung 46, während die Außenseiten in Seitenansicht (Fig. 4) eine elliptische Vertiefung 54, 55 bilden. Die Längserstreckung dieser Vertiefungen 54, 55 verläuft senkrecht zur Quermittelebene L (Fig. 4) des Klemmteiles 3.

Die freien Schenkelabschnitte 62, 63 sind wie die Übergangsabschnitte 58, 59 nach innen gekrümmt. Sie haben, in Ansicht gemäß Fig. 3 gesehen, gekrümmte Innen- und Außenseiten 40, 42 und 52, 53. Die Innenseiten 40, 42 haben wesentlich kleineren Krümmungsradius als die Außenseiten 52, 53. Die oberen und unteren Ränder 64, 65 der Schenkel 44, 45 verlaufen derart s-förmig gekrümmt (Fig. 4), daß die Übergangsabschnitte 58, 59 an den Quersteg 36 mit konkav in Richtung zueinander verlaufenden Randabschnitten anschließen. Sie gehen in teilkreisförmig nach außen gekrümmte Randabschnitte der Mittelabschnitte 60, 61 über, die kleineren Krümmungsradius als die Ränder der Übergangsabschnitte 58, 59 haben. Die Randabschnitte der freien Schenkelabschnite 62, 63 sind mit großem Krümmungsradius so gekrümmt, daß sie in Seitenansicht der Schenkel (Fig. 2, 4) Dreieckform haben. Die freien Enden 50, 51 der Schenkelabschnitte 62, 63 sind kuppenförmig abgerundet. Die äußeren Schenkelabschnitte 62, 63 begrenzen eine Einführöffnung 47.

Die Klemmteile 2, 3 bestehen vorzugsweise aus elastischem Kunststoff, wie beispielsweise Polyurethan. Dadurch können die Klemmteile nicht nur einfach und kostengünstig gefertigt werden, sondern haben vor allem eine hohe Elastizität, durch die die Schenkel beim Einführen einer Sattelstange oder dgl. leicht auseinanderund anschließend wieder in ihre Ausgangslage zurückfedern.

Die dreieckförmige Ausbildung der Schenkelenden gewährleistet, daß die Klemmteile 2, 3 beim Parken eines Fahrrades leicht an den verschiedenen Sattelstangen, Bowdenzügen, Fahrradpumpen, -taschen und dergleichen vorbeibewegt werden können. Dadurch wird ein Hängenbleiben oder Verklemmen oder auch eine Beschädigung dieser Teile sicher verhindert.

Im Bereich der Einführöffnung 47 hat die Aufnahmeöffnung 46 größere lichte Weite als im Bereich der Verengung 48 und der vom Quersteg 36 und den Übergangsschenkeln 58, 59 begrenzten Halteöffnung 49.

In Parkstellung der Fahrräder 4 und 5 liegt deren Sattelstange 56, 57 im engeren Aufnahmeabschnitt 49 der Aufnahmeöffnung 46. In dieser Lage ist sie durch die Klemmschenkel 43 und 44, insbesondere durch die Verengung 48, in ihrer Lage gesichert. Das Einschieben der Sattelstange 56, 57 in den Aufnahmeabschnitt 49 wird dadurch erleichtert, daß die Sattelstange zunächst über die Einführöffnung 47 in die Aufnahmeöffnung 46 geschoben werden kann. Danach werden die Klemmschenkel beim Hindurchschieben der Sattelstange 56 durch die Verengung 48 nach außen gedrückt, bis die Sattelstange im Aufnahmeabschnitt 49 liegt. Die Klemmschenkel 43, 44 federn dann in ihre Ausgangslage zurück, in der die Sattelstange sicher in der Aufnahmeöffnung 46 gehalten ist. Die in die beiden unterschiedlich weiten Abschnitte unterteilte Aufnahmeöffnung 46 hat den Vorteil, daß die Fahrräder auch dann einwandfrei am Fahrradständer 1 gesichert werden können, wenn an ihr beispielsweise Fahrradpumpen, Getränkeflaschen, Werkzeugtaschen oder eine Halterung für einen Kindersitz oder dergleichen vorgesehen sind. In diesem Fall können solche Teile im Bereich der Verengung 48 oder der Einführöffnung 47 liegen, so daß sie beim Parken des Fahrzeuges bzw. Einführen der Sattelstange 56 in den Aufnahmeabschnitt 49 nicht stören und die Sattelstange dennoch sicher arretiert werden kann. In den Aufnahmen der Klemmteile 2, 3 können aber auch ohne weiteres Sattelstangen mit größerem Durchmesser befestigt werden, wenn diese dann im Bereich der Einführöffnung zwischen den Klemmschenkeln 43 und 44 angeordnet sind.

In der Aufnahmeöffnung 46 können somit die verschiedensten Sattelstangen von Fahrrädern einwandfrei festgeklemmt werden, auch wenn an diesen kleinere Teile, wie Pumpen, Getränkeflaschen, Kindersitzbefestigungen oder auch Bowdenzüge für Schaltungen oder Bremsen, mittels Klammern angeordnet sind. Wie erwähnt, liegt in einem solchen Fall beispielsweise die Pumpe im einen Abschnitt der Aufnahmeöffnung und die Sattelstange im anderen Aufnahmeöffnungsabschnitt. Beispielsweise kann die Pumpe aber auch im Bereich des Aufnahmeabschnittes 49 und die Sattelstange im Bereich des weiteren Einführabschnittes 47 liegen.

Aber auch in einem Fall, in dem die Fahrradsattelstange so dimensioniert ist, daß sie weder im Aufnahmeabschnitt 49 noch in dem weiteren Einführöffnungsabschnitt 47 untergebracht werden kann, kann ein solches Fahrrad ohne weiteres am Fahrradständer 1 geparkt werden. In diesem Fall kann die Sattelstange von der Außenseite an den Fahrradständer angelehnt werden. Die Fahrradstange wird dann an die außen liegende Vertiefung 54, 55 des Klemmteiles 2, 3 angelehnt und über ein Sicherungsteil, wie eine Kette, die durch den einen Haltebügel 18 geschlungen wird, am Fahrradständer gegen Diebstahl gesichert.

Für das Fahrrad 5 ist am vertikalen Schenkel 7 der Stütze 6 eine konvex gekrümmte Auffahrrampe 66 (Fig. 1, 5 und 6) befestigt, auf der das Vorderrad 67 des Fahrrades 5 steht. Die Auffahrrampe 66, deren beide Enden Abstand vom Boden haben, ist auf einem quer vom Schenkel 7 der Stütze 6 abstehenden Träger 68 (Fig. 5) befestigt. Da das höher liegende Fahrrad 5 in der Parkstellung an der Vorderseite abgehoben ist, läßt sich seine Sattelstange 57 im höher liegenden Klemmteil 3 sicher festklemmen.

## Patentansprüche

1. Ständer für Fahrräder, mit einer Stütze (6), an der mindestens ein Aufnahmeteil (2, 3) befestigt ist, das eine Aufnahmeöffnung (46) für ein Fahrradteil (56, 57) hat und mindestens zwei in Einführrichtung (P) hintereinander liegende, unterschiedlich weite Aufnahmeabschnitte (47, 49) aufweist, von denen der in Einführrichtung (P) hintere Aufnahmeabschnitt (47) größere lichte Weite hat als der in Einführrichtung (P) vordere Aufnahmeabschnitt (49),
**dadurch gekennzeichnet, daß** das Aufnahmeteil (2, 3) ein Klemmteil mit Klemmaufnahmeabschnitten (47, 49) ist, in denen Fahrräder (4, 5) mit Sattelstangen als Fahrradteile (56, 57) der verschiedensten Durchmesser und/oder mit an der Sattelstange befestigten Anbauten gehalten werden können.

2. Ständer nach Anspruch 1,
**dadurch gekennzeichnet, daß** sich der in Einführrichtung (P) hintere Klemmaufnahmeabschnitt (47) entgegen Einführrichtung (P) erweitert.

3. Ständer nach Anspruch 1 oder 2,
**dadurch gekennzeichnet, daß** zwischen den Klemmaufnahmeabschnitten (47, 49) eine Verengung (48) mit im Querschnitt teilkreisförmig nach innen gekrümmten Begrenzungsflächen (39, 41) gebildet ist.

4. Ständer nach einem der Ansprüche 1 bis 3,
**dadurch gekennzeichnet, daß** einander zugewandte innere Begrenzungsflächen (40, 42) des in Einführrichtung (P) hinteren Klemmaufnahmeabschnittes (47) mit größerem Krümmungsradius gekrümmt sind als Begrenzungsflächen (38) des vorderen Klemmaufnahmeabschnittes (49).

5. Ständer nach einem der Ansprüche 1 bis 4,
**dadurch gekennzeichnet, daß** die Klemmaufnahmeöffnung (46) durch Schenkel (43, 44) und einen Quersteg (36) des im Querschnitt etwa U-förmigen Klemmteiles (2, 3) begrenzt ist.

6. Ständer nach Anspruch 3,
**dadurch gekennzeichnet, daß** mindestens der eine Klemmschenkel (43, 44), vorzugsweise beide Klemmschenkel, etwa in Höhe der Verengung (48) der Aufnahme (46) des Klemmteiles (2, 3) an ihrer Außenseite (52, 53) eine vorzugsweise teilkreisförmig abgerundete Bodenfläche aufweisende Vertiefung (54, 55) hat, und daß vorzugsweise die Vertiefungen (54, 55) in Seitenansicht auf den Klemmschenkel (43, 44) elliptischen Umriß häben.

7. Ständer nach Anspruch 6,
**dadurch gekennzeichnet, daß** die Längserstreckung der Vertiefung (54, 55) in Höhenrichtung des Klemmschenkels (43, 44) verläuft.

8. Ständer nach einem der Ansprüche 5 bis 7,
**dadurch gekennzeichnet, daß** sich die Klemmschenkel (43, 44), in Seitenansicht gesehen, in Richtung auf ihre freien Enden (50, 51) dreieckförmig verjüngen, und daß vorzugsweise die oberen und unteren Schenkelränder (64, 65) der Klemmschenkel (43, 44) wellenförmig gekrümmt sind.

9. Ständer nach einem der Ansprüche 1 bis 8,
**dadurch gekennzeichnet, daß** das Klemmteil (2, 3) mit einem vorzugsweise hülsenförmigen Anschlußstück (20, 21) an einem Querträger (12) befestigt ist, und daß das Klemmteil (2, 3) vorzugsweise mit seinem Anschlußstück (20, 21) auf einem Befestigungszapfen des Querträgers (12) sitzt.

10. Ständer nach Anspruch 9,
**dadurch gekennzeichnet, daß** das Anschlußstück (20, 21) auf dem Befestigungszapfen des Querträgers (12) mit mindestens einem Sicherungsteil, vorzugsweise einem Querstift, gehalten ist.

11. Ständer nach einem der Ansprüche 1 bis 10,
**dadurch gekennzeichnet, daß** an der Stütze (6), vorzugsweise am Querträger (12), mindestens ein, vorzugsweise zwei mit Abstand nebeneinander liegende Haltebügel (18, 19) befestigt sind.

12. Ständer nach einem der Ansprüche 9 bis 11,
**dadurch gekennzeichnet, daß** am Querträger (12) zwei Klemmteile (2, 3) mit Abstand voneinander befestigt sind, die vorzugsweise auf unterschiedlicher Höhe liegen.

## Claims

1. A stand for bicycles, comprising a support (6) to which is fixed at least one receiving part (2, 3) having a receiving opening (46) for a bicycle part (56, 57) and at least two receiving portions (47, 49) of different width arranged one behind the other in the insertion direction (P), of which the rear receiving portion (47) in the insertion direction (P) has a greater clear width than the front receiving portion (49) in the insertion direction (P), **characterised in that** the receiving part (2, 3) is a clamping part with clamping receiving portions (47, 49) in which bicycles (4, 5) with saddle bars as bicycle parts (56, 57) of different diameter and/or with attachments fixed to the saddle bar can be held.

2. A stand according to claim 1, **characterised in that** the rear clamping receiving portion (47) in the insertion direction (P) widens counter to the insertion direction (P).

3. A stand according to claim 1 or 2, **characterised in that** a constriction (48) is formed between the clamping receiving portions (47, 49) and has boundary surfaces (39, 41) which curve inwards in the shape of an arc in cross-section.

4. A stand according to any one of claims 1 to 3, **characterised in that** facing inner boundary surfaces (40, 42) of the rear clamping receiving portion (47) in the insertion direction (P) have a greater radius of curvature than boundary surfaces (38) of the front clamping receiving portion (49).

5. A stand according to any one of claims 1 to 4, **characterised in that** the clamping receiving opening (46) is bounded by arms (43, 44) and a crosspiece (36) of the clamping part (2, 3), which is substantially U-shaped in cross-section.

6. A stand according to claim 3, **characterised in that** at least one of the clamping arms (43, 44), preferably both clamping arms, has, on its outside (52, 53), a recess (54, 55) having a base surface preferably rounded in an arc-shaped manner substantially at the level of the constriction (48) of the receiving opening (46) of the clamping part (2, 3), and **in that** the recesses (54, 55) preferably have an elliptical contour when the clamping arms (43, 44) are seen in side view.

7. A stand according to claim 6, **characterised in that** the longitudinal extent of the recess (54, 55) extends in the vertical direction of the clamping arm (43, 44).

8. A stand according to any one of claims 5 to 7, **characterised in that** the clamping arms (43, 44), when seen in side view, taper in a triangular manner towards their free ends (50, 51), and **in that** the upper and lower edges (64, 65) of the clamping arms (43, 44) are preferably curved in an undulating manner.

9. A stand according to any one of claims 1 to 8, **characterised in that** the clamping part (2, 3) is fixed by a preferably sleeve-shaped connecting piece (20, 21) to a transverse carrier (12), and **in that** the clamping part (2, 3) is preferably mounted with its connecting piece (20, 21) on a fixing pin of the transverse carrier (12).

10. A stand according to claim 9, **characterised in that** the connecting piece (20, 21) is held on the fixing pin of the transverse carrier (12) by at least one securing part, preferably a transverse pin.

11. A stand according to any one of claims 1 to 10, **characterised in that** at least one, preferably two shackles (18, 19) arranged spaced apart side by side are fixed to the support (6), preferably to the transverse carrier (12).

12. A stand according to any one of claims 9 to 11, **characterised in that** two clamping parts (2, 3) are fixed, spaced apart, to the transverse carrier (12) and are preferably arranged at different heights.

## Revendications

1. Support de bicyclette avec un appui (6) auquel est fixé au moins une pièce de logement (2, 3) ayant une ouverture de logement (46) pour une pièce de la bicyclette (56, 57) et comprenant au moins deux parties de logement (47, 49), situées l'une derrière l'autre en direction d'entrée (P) et différente largeur, desquelles la partie de logement à l'arrière (47) en direction d'entrée (P) a une portée libre plus grande que la partie de logement à l'avant (49) en direction d'entrée (P),
**caractérisé en ce que** la pièce de logement (2, 3) est une pièce de serrage avec des parties de logement de serrage (47, 49) dans lesquelles peuvent être tenues des bicyclettes (4, 5) avec tubes de porte-selle comme pièces de bicyclette (56, 57) des diamètres les plus différents et/ou avec des pièces rapportées fixées au tube de porte-selle.

2. Support selon la revendication 1,
**caractérisé en ce que** en direction d'entrée (P) la partie de logement de serrage (47) arrière s'elargit à l'oppposé de la direction d'entrée (P).

3. Support selon la revendication 1 ou 2,
**caractérisé en ce que** entre les parties de logement de serrage (47, 49) un rétrécissement (48) est formé avec des périphéries (39, 41) courbées en profil vers l'intérieur en forme de limbe.

4. Support selon l'une des revendications 1 à 3,
**caractérisé en ce que** des périphéries intérieures (40, 42) de la partie de logement de serrage arrière (47) en direction d'entrée (P) se faisant face l'une à l'autre sont courbées avec un rayon de courbure plus grand que des périphéries (38) de la partie de logement de serrage avant (49).

5. Support selon l'une des revendications 1 à 4,
**caractérisé en ce que** l'ouverture de logement de serrage (46) est limitée par des branches (43, 44) et une entretoise (36) de la pièce de serrage (2, 3) laquelle est en coupe environ en forme d'U.

6. Support selon la revendication 5,
**caractérisé en ce que** au moins l'une des branches de serrage (43, 44), de préférence les deux serrages ont sur leur face externe (52, 53) une cavité (54, 55) comprenant un encombrement de préférence arrondi en forme de limbe, environ à la hauteur du rétrécissement (48) du logement (46) de la pièce de serrage (2, 3) et que de préférence les cavités (54, 55) ont un contour elliptique en vue de côté sur la branche de serrage (43, 44).

7. Support selon la revendication 6,
**caractérisé en ce que** la projection longitudinale de la cavité (54, 55) est en direction verticale de la branche de serrage (43, 44).

8. Support selon une des revendications 5 à 7,
**caractérisé en ce que** les branches de serrage (43, 44), vues en direction latérale, se rétressissent en forme triangulaire vers leurs éxtrémités libres (50, 51) et que de préférence les bords des branches (64, 65) supérieurs et inférieurs des branches de serrage (43, 44) sont courbés en ondulations.

9. Support selon une des revendications 1 à 8,
**caractérisé en ce que** la pièce de serrage (2, 3) est fixée avec une pièce de raccordement (20, 21) de préférence en forme de manchon à une traverse (12) et que la pièce de serrage (2, 3) est placée de préférence avec sa pièce de raccordement (20, 21) sur un nez de fixation de la traverse (12).

10. Support selon la revendication 9,
**caractérisé en ce que** la pièce de raccordement (20, 21) est arrêtée sur le nez de fixation de la traverse (12) avec au moins une pièce de sécurité, de préférence une goupille transversale.

11. Support selon une des revendications 1 à 10,
**caractérisé en ce que** à l'appui (6), de préférence à la traverse (12) est fixé au moins un, de préférence deux étriers de retenue (18, 19) côte à côte à une certaine distance.

12. Support selon une des revendications 9 à 11,
**caractérisé en ce que** à la traverse (12) sont fixées deux pièces de serrage (2, 3) à une certaine distance l'une de l'autre et situées de préférence à hauteur différente.
